# EUROPÄISCHE PATENTSCHRIFT

(11) **EP 1 287 249 B1**
(45) Veröffentlichungstag und Bekanntmachung des Hinweises auf die Patenterteilung: **22.12.2004**
(21) Anmeldenummer: 01933931.6
(22) Anmeldetag: 04.05.2001
(51) Int. Cl.: F02D 41/02

(54) **DIREKTEINSPRITZENDE UND FREMDGEZÜNDETE VERBRENNUNGSKRAFTMASCHINE UND VERFAHREN ZUR MINDERUNG EINES RESTSAUERSTOFFGEHALTES IM ABGAS DERSELBEN**
DIRECT-INJECTION, SPARK-IGNITED INTERNAL COMBUSTION ENGINE AND METHOD FOR REDUCING THE RESIDUAL OXYGEN CONTENT IN THE EXHAUST GAS THEREOF
MOTEUR A COMBUSTION INTERNE A INJECTION DIRECTE ET A ALLUMAGE COMMANDE, ET PROCEDE POUR REDUIRE LA TENEUR EN OXYGENE RESIDUEL DES GAZ D'ECHAPPEMENT DE CE MOTEUR

(30) Priorität: 19.05.2000 DE 10024773
(43) Veröffentlichungstag der Anmeldung: 05.03.2003
(73) Patentinhaber: Volkswagen Aktiengesellschaft, 38436 Wolfsburg (DE)
(72) Erfinder: POTT, Ekkehard, 38518 Gifhorn (DE); STIEBELS, Bernd, 38528 Adenbüttel (DE); EBUS, Feitse, 38446 Wolfsburg (DE); SPERLING, Helmut, 38518 Gifhorn (DE)
(74) Vertreter: Schneider, Henry, Dipl.-Ing.
(86) Internationale Anmeldenummer: PCT/EP2001/005057
(87) Internationale Veröffentlichungsnummer: WO 2001/090555

(56) Entgegenhaltungen:
- DE-A- 19 739 848
- DE-A- 19 852 600
- GB-A- 2 318 310
- PATENT ABSTRACTS OF JAPAN vol. 1999, no. 09, 30. Juli 1999 (1999-07-30) & JP 11 101147 A (MAZDA MOTOR CORP), 13. April 1999 (1999-04-13)
- PATENT ABSTRACTS OF JAPAN vol. 018, no. 301 (C-1210), 9. Juni 1994 (1994-06-09) & JP 06 063359 A (HITACHI LTD;OTHERS: 01), 8. März 1994 (1994-03-08)
- PATENT ABSTRACTS OF JAPAN vol. 1999, no. 12, 29. Oktober 1999 (1999-10-29) & JP 11 190249 A (HONDA MOTOR CO LTD), 13. Juli 1999 (1999-07-13)

## Beschreibung

Die Erfindung betrifft eine direkteinspritzende und fremdgezündete Verbrennungskraftmaschine mit den im Oberbegriff des Anspruchs 1 genannten Merkmalen sowie ein Verfahren zur Minderung eines Restsauerstoffgehaltes im Abgas der Verbrennungskraftmaschine mit den im Oberbegriff des Anspruchs 7 genannten Merkmalen.

Zur Verminderung eines Kraftstoffverbrauches ist es bekannt, auch bei fremdgezündeten Verbrennungskraftmaschinen einen zu verbrennenden Kraftstoff direkt in den Brennraum einzuspritzen. Dabei lassen sich besonders hohe Wirkungsgrade und somit niedrige Kraftstoffverbräuche unter mageren Betriebsphasen der Verbrennungskraftmaschine realisieren. Damit einhergehend steigt allerdings auch eine Emission von Stickoxiden NOₓ an. Diesen Umstand versucht man durch Anordnung eines Katalysatorsystems im Abgasstrang der Verbrennungskraftmaschine entgegenzuwirken. Derartige Katalysatorsysteme umfassen dazu Reduktionskatalysatoren, an denen NOₓ mit Reduktionsmitteln wie unvollständig verbrannten Kohlenwasserstoffen HC und Kohlenmonoxid CO wieder zu Stickstoff und Wasser konvertiert werden kann.

Herkömmliche Katalysatorsysteme ermöglichen jedoch nur dann eine weitestgehend vollständige Reduktion der NOₓ-Emission, wenn ausreichende Reduktionsmittelmassenströme zur Verfügung gestellt werden. Dies erfordert prinzipiell zumindest den stöchiometrischen - in der Praxis zumeist sogar einen zumindest leicht fetten - Betrieb. Ein Betriebsmodus der Verbrennungskraftmaschine wird demnach unter dem Gesichtspunkt möglichst niedriger Emission auf stöchiometrische oder fette Luft-Kraftstoff-Gemische eingeregelt beziehungsweise gesteuert und infolgedessen kann der besonders verbrauchsgünstige Magerbetrieb nicht mehr aufrecht erhalten werden.

Nach einem alternativen Konzept ist in das Katalysatorsystem eine NOₓ-Speicherkomponente integriert, die gegebenenfalls mit dem Reduktionskatalysator als ein sogenannter NOₓ-Speicherkatalysator zusammengefasst werden kann. Der NOₓ-Speicherkatalysator ermöglicht eine Sorption von NOₓ in Phasen eines mageren Betriebes. Eine direkteinspritzende und fremdgezündete Verbrennungskraftmaschine mit einem NOₓ-Speicherkatalysator sowie einer Mess-, Auswerte- und Steuereinrichtung zur Betriebssteuerung der Verbrennungskraftmaschine und Beeinflussung der Abgaszusammensetzung ist beispielsweise aus der JP 11 101 147 A bekannt. Eine NOₓ-Einlagerung ist durch eine gegebene NOₓ-Speicherkapazität begrenzt, so dass der NOₓ-Speicherkatalysator in regelmäßigen Abständen regeneriert werden muss. Eine Regeneration erfolgt durch einen kurzfristigen Wechsel in den stöchiometrischen oder fetten Betriebsmodus der Verbrennungskraftmaschine. Das eingelagerte NOₓ wird dann desorbiert und an dem Reduktionskatalysator mit den Reduktionsmitteln umgesetzt. Ein Zeitpunkt für die Einleitung der Regeneration, eine Vorgabe der Regenerationsparameter und andere, für ein möglichst wartungsfreies und dauerhaft stabiles Betriebsverhaltens des NOₓ-Speicherkatalysators notwendige Parameter können mittels einer Mess-, Auswerte- und Steuereinrichtung vorgegeben werden. Derartige Einrichtungen und diskontinuierliche Steuerungsverfahren sind bereits bekannt und werden daher hier nicht näher erläutert.

Der Betrieb des NOₓ- Speicherkatalysators ist ferner temperaturabhängig. Zum einen können für die Katalysator- beziehungsweise Speicherkomponenten je nach Beschaffenheit des verwendeten Materials optimale Temperaturfenster bestimmt werden, in denen eine besonders hohe Konvertierungsrate beziehungsweise ein gutes Sorptionsverhalten sichergestellt ist. Zum anderen muss eine maximale Grenztemperatur beachtet werden, oberhalb der mit einer Schädigung des NOₓ-Speicherkatalysators zu rechnen ist. Eine solche Grenztemperatur hängt dabei nicht nur von ihrem absoluten Wert ab, sondern wird auch durch die Beschaffenheit der Abgaszusammensetzung beeinflusst. So hat es sich gezeigt, dass bereits bei Katalysatortemperaturen > 700 °C, gleichzeitig stattfindenden Konvertierungsreaktionen und übermäßig hoher Sauerstoffbeaufschlagung eine irreversible Schädigung der katalytisch aktiven Edelmetallkomponenten des NOₓ-Speicherkatalysators auftreten kann. Gerade im fetten Betriebsmodus - beispielsweise während einer Regenerationsphase des NOₓ-Speicherkatalysators - sind die Katalysatortemperaturen und Schadstoffumsätze an den Edelmetallkomponenten erhöht, so dass hier eine besondere Gefahr für mögliche Katalysatorschädigungen vorliegt.

Es hat sich gezeigt, dass eine solche Schädigung unter stark fetten Bedingungen, in denen Lambda bei < 0,85 liegt, weitestgehend vermieden werden kann. Nach den herkömmlichen Verfahren wird daher - nach einem erzwungenen Wechsel in den fetten Betriebsmodus - ein Lambdawert für das zu verbrennende Luft-Kraftstoff-Gemisch unterhalb eines Wertes von 0,85 gehalten. Auf diese Weise soll sichergestellt werden, dass keine Schädigung des Katalysators erfolgt. Nachteilig ist jedoch, dass somit auch ein deutlich schlechterer Wirkungsgrad und damit ein Mehrverbrauch und eine hohe Umweltbelastung in Kauf genommen werden muss.

Aufgabe der vorliegenden Erfindung ist es daher, eine direkteinspritzende und fremdgezündete Verbrennungskraftmaschine zur Verfügung zu stellen, die auch in lediglich leicht fetten Betriebsphasen keine Katalysatorschädigung zeigt. Aufgabe ist auch ein entsprechendes Verfahren.

Erfindungsgemäß wird diese Aufgabe durch die Verbrennungskraftmaschine mit einem Katalysatorsystem im Abgasstrang, das zumindest einen NOₓ-Speicherkatalysator umfasst, sowie einer Mess-, Auswerte- und Steuereinrichtung zur Betriebssteuerung der Verbrennungskraftmaschine und Beeinflussung einer Abgaszusammensetzung mittels geeigneter Stellglieder, mit den im Anspruch 1 genannten Merkmalen gelöst. Ferner lassen sich die aufgezeigten Nachteile durch das Verfahren zur Minderung des Restsauerstoffgehaltes im Abgas mit den im Anspruch 7 genannten Merkmalen überwinden. Die Verbrennungskraftmaschine zeichnet sich dadurch aus, dass die Stellglieder Mittel umfassen, mit denen Einspritzparameter und/oder Strömungsverhältnisse im Brennraum der Verbrennungskraftmaschine (10) als Verbrennungsparameter derart beeinflussbar sind, dass ein Abgas der Verbrennungskraftmaschine stromauf des NOₓ-Speicherkatalysators oder eines diesem vorgeschalteten Katalysators unter einer Gemischzusammensetzung im Bereich von λ = 0,9 bis 1,0 mindestens einen der folgenden Restsauerstoffgehalte besitzt:
(a) ≤ 0,4 Vol.-% in Betriebsphasen mit einer Drehzahl n ≥ 3000 U/min und einem effektiven Mitteldruck des Motors von ≥ 9 bar,
(b) ≤ 0,4 Vol.-% über mindestens 30 % eines Drehzahlbereichs von 5000 bis 6500 U/min oder 5000 U/min bis Nenndrehzahl und einem effektiven Mitteldruck des Motors von ≥ 9 bar, und
(c) ≤ 0,95 Vol.-% über mindestens 30 % eines Drehzahlbereichs von 2500 bis 5000 U/min und einem effektiven Mitteldruck des Motors von ≥ 8 bar.

Nach dem erfindungsgemäßen Verfahren werden als Verbrennungsparameter Einspritzparameter und/oder Strömungsverhältnisse im Brennraum der Verbrennungskraftmaschine entsprechend beeinflusst.

Nach einer bevorzugten Ausgestaltung der Verbrennungskraftmaschine beziehungsweise des Verfahrens sind die Verbrennungsparameter derart beeinflussbar, dass sich der gewünschte Restsauerstoffgehalt gemäß (a) zumindest bei einer Drehzahl n ≥ 4000 U/min, insbesondere n ≥ 5000 U/min, einstellt. Femer ist bevorzugt, dass die Verbrennungsparameter insbesondere bei einer Gemischzusammensetzung im Bereich von λ = 0,92 bis 0,95 mit Hinsicht auf den gewünschten Restsauerstoffgehalt beeinflusst werden.

Besonders vorteilhaft liegt der angegebene Restsauerstoffgehalt nicht nur bei einzelnen Drehzahlen, sondern in einem Drehzahlfenster vor, wobei die Daten eines Drehzahlfensters, durch Messen in Abständen mit 500 U/min oder kleiner und Interpolationen der dazwischenliegenden Werte ermittelt wird.

Vorzugsweise werden die angegebenen Restsauerstoffgehalte ebenso in mindestens 30 %, vorzugsweise mindestens 50 % und insbesondere mindestens 80 % des angegebenen Mitteldruckfensters eingehalten, wobei sich das Mitteldruckfenster von dem angegebenen minimalen Wert bis zum maximalen Mitteldruck bei der jeweiligen Drehzahl erstreckt. Die Bestimmung erfolgt hierbei durch Rastermessung im Abstand von 1 bar oder feiner und wiederum durch Interpolation. Alle Werte und Bestimmungen beziehen sich gleichermaßen auf die Vorrichtung und das Verfahren.

Die Stellglieder umfassen vorzugsweise Mittel, mit denen die Einspritzparameter und/oder die Strömungsverhältnisse beeinflussbar sind. Diese Mittel beinhalten ein Zünd- und Einspritzsystem, mit dem beispielsweise Verbrennungsparameter, wie ein Einspritzbeginn, ein Einspritzdruck, eine Einspritzdauer, ein Zündzeitpunkt und/oder eine Kraftstoffsprayform, verstellbar sind. Ferner werden Kolbenformen und/oder ein Ventil-Öffnungsquerschnitt und/oder eine Einlasskanalführung und/oder eine Lage und Neigung eines Injektors mit Hinsicht auf eine optimierte Wirkungsweise der Stellglieder angepasst.

Weitere bevorzugte Ausgestaltungen der Erfindung ergeben sich aus den übrigen, in den Unteransprüchen genannten Merkmalen.

Mit den erfindungsgemäßen Parametern kann ein direkteinspritzender magerlauffähiger, insbesondere schichtladefähiger Ottomotor auch bei hohen Lasten auch in einem schwach fetten Bereich betrieben werden (Homogenbetrieb), ohne hierbei den NOₓ-Speicherkatalysator zu überhitzen.

Die Erfindung wird nachfolgend in einem Ausführungsbeispiel anhand einer zugehörigen Zeichnung näher erläutert.

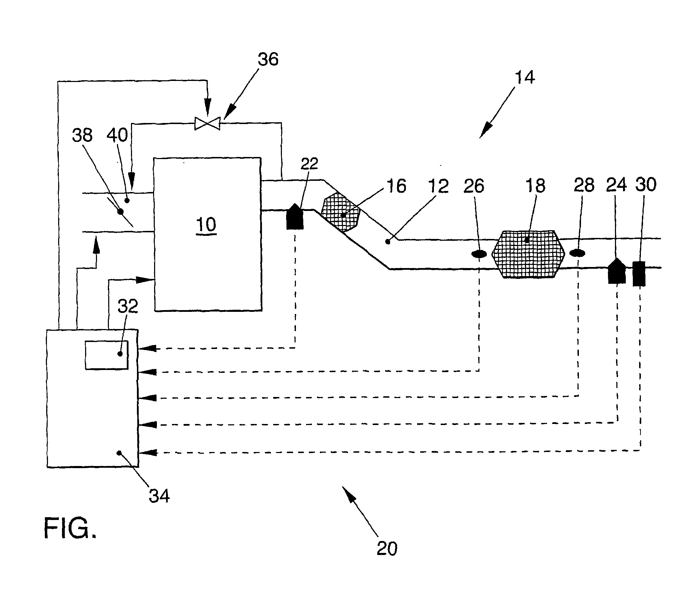

Die einzige Figur zeigt dabei in einer schematischen Perspektivansicht eine fremdgezündete, direkteinspritzende Verbrennungskraftmaschine 10, die in ihrem Abgasstrang 12 ein Katalysatorsystem 14 aufweist. Das Katalysatorsystem 14 besteht aus einem Vorkatalysator 16 sowie einem NOₓ-Speicherkatalysator 18. Der Vorkatalysator 16 besteht im Allgemeinen aus einem hochtemperaturbeständigen Material, das eine 3-Wege-aktive Katalysatorkomponente beinhaltet. Eine solche Kataiysatorkomponente ermöglicht zum einen eine Oxidation von Reduktionsmitteln wie CO und HC mit Sauerstoff und zum anderen eine reduktive Umsetzung von NOₓ mit den genannten Reduktionsmitteln. Der NOₓ-Speicherkatalysator 18 weist ebenfalls 3-Wege-aktive Katalysatorkomponenten auf und besitzt zudem eine Speicherkomponente, die es ermöglicht, in mageren Betriebsphasen der Verbrennungskraftmaschine 10 NOₓ einzulagern. Derartige Katalysatorsysteme 14 lassen sich bereits dem Stande der Technik entnehmen.

Weiterhin ist der Verbrennungskraftmaschine 10 sowie dem Katalysatorsystem 14 eine Mess-, Auswerte- und Steuereinrichtung 20 zugeordnet, die es erlaubt, eine diskontinuierliche Betriebssteuerung durch noch näher erläuterte Stelleingriffe aufrecht zu erhalten. Die Mess-, Auswerte- und Steuereinrichtung 20 beinhaltet Messkomponenten, wie beispielsweise die hier dargestellten Lambdasonden 22, 24, Temperaturfühler 26, 28 sowie einen NOₓ Sensor 30. Die Messkomponenten erlauben die direkte Erfassung steuerungsrelevanter Parameter, wie Temperatur oder Abgaszusammensetzung. Anzahl, Lage und Beschaffenheit derartiger Messkomponenten lassen sich in einem weiten Maße variabel gestalten. Ferner kann die Mess-, Auswerte- und Steuereinrichtung 20 auch Modelle umfassen, mit denen Temperaturen oder Abgaszusammensetzungen in ausgewählten Bereichen des Abgasstranges 12 berechnet werden können. Die genannten Einrichtungen und Verfahren beziehungsweise Modelle zur Ermittlung relevanter Steuerungsparameter sind bereits aus dem Stande der Technik bekannt und sollen - da nicht Gegenstand der vorliegenden Erfindung - nicht näher erläutert werden.

Die Mess-, Auswerte- und Steuereinrichtung 20 umfasst ferner als Auswerte- und Steuerkomponente ein Steuergerät 32, das als selbstständige Einheit realisiert werden kann oder in ein bereits vorhandenes Motorsteuergerät 34 integriert ist. In dem Steuergerät 32 sind Algorithmen in digitaler Form hinterlegt, deren Abarbeitung zur Vorgabe von Stellgrößen für geeignete Stellglieder der Verbrennungskraftmaschine 10 führt. Mit Hilfe der Stellglieder kann die Abgaszusammensetzung beziehungsweise ein Betrieb der Verbrennungskraftmaschine 10 gesteuert werden. So kann beispielsweise eine hier nur schematisch angedeutete Abgasrückführeinrichtung 36 oder eine Drosselklappe 38 in einem Ansaugrohr 40 zur Beeinflussung der der Verbrennungskraftmaschine 10 zugeführten Luftmassenströme genutzt werden. Derartige Stellglieder umfassen ferner ein hier nicht dargestelltes Zünd- und Einspritzsystem. Über das Zünd- und Einspritzsystem lassen sich ebenfalls die Verbrennungsparameter während der Verbrennung eines Luft-Kraftstoff-Gemisches in der Verbrennungskraftmaschine 10 beeinflussen. Insbesondere lassen sich Einspritzparameter und/oder die Strömungsverhältnisse im Brennraum auf diese Weise ansteuern, so dass ein Einspritzbeginn, ein Einspritzdruck, eine Einspritzdauer, ein Zündzeitpunkt und/oder eine Kraftstoffsprayform den jeweiligen Notwendigkeiten flexibel angepasst werden können.

Besteht nun beispielsweise die Notwendigkeit, den Motor im Homogenbetrieb mit hoher Leistung zu betreiben, so wird - durch Ansteuerung der genannten Stellglieder mittels der Mess-, Auswerte- und Steuereinrichtung 20 - eine Gemischzusammensetzung des zu verbrennenden Luft-Kraftstoff-Gemisches in Richtung fett verändert. Liegt eine Drehzahl der Verbrennungskraftmaschine 10 oberhalb von n ≥ 5000 U/min und herrscht ein effektiver Mitteldruck des Motors von ≥ 9 bar, so ist es möglich, die fette Betriebsphase mit einem Lambdabereich zwischen 0,9 bis 0,995 zu realisieren, ohne dass ein Restsauerstoffgehalt insbesondere über 80 % des Drehzahlbereiches über einen Wert 0,4 Vol.% steigt. Besonders sicher können die Konditionen bei einer Gemischzusammensetzung im Bereich von λ = 0,92 bis 0,95 aufrecht erhalten werden. Durch Adaption einer Kolbenform und/oder eines Ventil-Öffnungsquerschnittes und/oder einer Einlasskanalführung und/oder einer Lage und Neigung eines Injektors kann eine optimierte Wirkungsweise der Stellglieder noch erhöht werden, so dass auch bei niedrigeren Drehzahlen mit n ≥ 4000 U/min, insbesondere n ≥ 3000 U/min, zuverlässig der Restsauerstoffgehalt unter dem gewünschten Schwellenwert gehalten werden kann.

Zur weiteren Verdeutlichung der Erfindung werden im Folgenden Meßwerte eines 1,4 Liter Ottomotor mit Tumbleprinzip wiedergegeben. Der Ottomotor hat eine Leistung von 77 kW (105 PS) und ein maximales Drehmoment von 130 Nm. Der Motor erreicht über den gesamten Drehzahlbereich einen Mitteldruck von mindestens 8 bar, von 4500 bis 5500 U/min 11,5 bar.

| U/min | Lambda | Mitteldruck | brutto-Sauerstoffgehalt (Vol.-% ) |
|---|---|---|---|
| 3000 | 1,0 | 8 - 10,5 | 0,75 - 0,82 |
| 4000 | 1,0 | 8 - 11 | 0,87 - 0,91 |
| 5000 | 0,99 - 0,95 | 9 - 11,5 | 0,425 - 0,68 |
| 5500 | 0,95 - 0,91 | 9 - 11,5 | 0,28 - 0,36 |

lm Bereich von 2500 bis 5000 U/min und einem Mitteldruck ≥ 8 bar liegt der tatsächliche Sauerstoffgehalt (brutto-Sauerstoffgehalt) im Abgas bei über 90 % des Kennfeldes bei unter 0,95 Vol.-% bei einem λ < 1,009. lm Drehzahlbereich 5000 bis 6000 und einem Mitteldruck ≥ 9 bar liegt über 80 % des Kennfeldes der Sauerstoffgehalt bei ≤ 0,45 Vol.-% (bezogen auf den Kennfeldbereich mit Lambda ≥ 0,9).

### BEZUGSZEICHENLISTE

- 10: Verbrennungskraftmaschine
- 12: Abgasstrang
- 14: Katalysatorsystem
- 16: Vorkatalysator
- 18: NOₓ-Speicherkatalysator
- 20: Mess-, Auswerte- und Steuereinrichtung
- 22, 24: Lambdasonden
- 26, 28: Temperaturfühler
- 30: NOₓ-Sensor
- 32: Steuergerät
- 34: Motorsteuergerät
- 36: Abgasrückführeinrichtung
- 38: Drosselklappe
- 40: Ansaugrohr

## Patentansprüche

1. Direkteinspritzende und fremdgezündete Verbrennungskraftmaschine (10) mit einem Katalysatorsystem im Abgasstrang (12), das zumindest einen NOₓ-Speicherkatalysator (18) umfasst, sowie einer Mess-, Auswerte- und Steuereinrichtung (20) zur Betriebssteuerung der Verbrennungskraftmaschine und Beeinflussung einer Abgaszusammensetzung mittels geeigneter Stellglieder, **dadurch gekennzeichnet, dass** die Stellglieder Mittel umfassen, mit denen Einspritzparameter und/oder Strömungsverhältnisse im Brennraum der Verbrennungskraftmaschine (10) derart beeinflussbar sind, dass ein Abgas der Verbrennungskraftmaschine (10) stromauf des NOₓ-Speicherkatalysators (18) oder eines diesem vorgeschalteten Katalysators unter einer Gemischzusammensetzung im Bereich von λ = 0,9 bis 1,0 mindestens einen der folgenden Restsauerstoffgehalte besitzt:
(a) ≤ 0,4 Vol.-% in Betriebsphasen mit einer Drehzahl n ≥ 3000 U/min und einem effektiven Mitteldruck des Motors von ≥ 9 bar,
(b) ≤ 0,4 Vol.-% über mindestens 30 % eines Drehzahlbereichs von 5000 bis 6500 U/min oder 5000 U/min bis Nenndrehzahl und einem effektiven Mitteldruck des Motors von ≥ 9 bar, und
(c) ≤ 0,95 Vol.-% über mindestens 30 % eines Drehzahlbereichs von 2500 bis 5000 U/min und einem effektiven Mitteldruck des Motors von ≥ 8 bar.

2. Verbrennungskraftmaschine nach Anspruch 1, **dadurch gekennzeichnet, dass** nach (b) und/oder (c) der angegebene Restsauerstoffgehalt über mindestens 50 % und insbesondere mindestens 80 % des Drehzahlbereichs vorliegt.

3. Verbrennungskraftmaschine nach Anspruch 1 oder 2, **dadurch gekennzeichnet, dass** nach (a) die Drehzahl n ≥ 4000 U/min, insbesondere n ≥ 5000 U/min, ist.

4. Verbrennungskraftmaschine nach einem der vorhergehenden Ansprüche, **dadurch gekennzeichnet, dass** die Gemischzusammensetzung im Bereich von λ = 0,92 bis 0,95 liegt.

5. Verbrennungskraftmaschine nach einem der vorhergehenden Ansprüche, **dadurch gekennzeichnet, dass** die Mittel ein Zünd- und Einspritzsystem beinhalten, mit dem mindestens einer der folgenden Verbrennungsparameter beeinflussbar ist: Spritzbeginn, Einspritzdruck, Einspritzdauer, Zündzeitpunkt und Kraftstoffsprayform.

6. Verbrennungskraftmaschine nach einem der vorhergehenden Ansprüche, **dadurch gekennzeichnet, dass** eine Kolbenform und/oder ein Ventil-Öffnungsquerschnitt und/oder eine Einlasskanalführung und/oder eine Lage und Neigung eines Injektors einer optimierten Wirkungsweise der Stellglieder angepasst sind.

7. Verfahren zur Minderung eines Restsauerstoffgehalts im Abgas einer direkteinspritzenden und fremdgezündeten Verbrennungskraftmaschine (10) mit einem Katalysatorsystem im Abgasstrang (12), das. zumindest einen NOₓ-Speicherkatalysator (18) umfasst, sowie einer Mess-, Auswerte- und Steuereinrichtung (20) zur Betriebssteuerung der Verbrennungskraftmaschine (10) und Beeinflussung einer Abgaszusammensetzung mittels geeigneter Stellglieder, **dadurch gekennzeichnet, dass** Einspritzparameter und/oder Strömungsverhältnisse im Brennraum der Verbrennungskraftmaschine (10) derart beeinflusst werden, dass ein Abgas der Verbrennungskraftmaschine (10) stromauf des NOₓ-Speicherkatalysators (18) oder eines diesem vorgeschalteten Katalysators unter einer Gemischzusammensetzung im Bereich von λ = 0,9 bis 1,0 mindestens einen der folgenden Restsauerstoffgehatte besitzt:
(a) ≤ 0,4 Vol.-% in Betriebsphasen mit einer Drehzahl n ≥ 3000 U/min und einem effektiven Mitteldruck des Motors von ≥ 9 bar,
(b) ≤ 0,4 Vol.-% über mindestens 30 % eines Drehzahlbereichs von 5000 bis 6500 U/min oder 5000 U/min bis Nenndrehzahl und einem effektiven Mitteldruck des Motors von ≥ 9 bar, und
(c) ≤ 0,95 Vol.-% über mindestens 30 % eines Drehzahlbereichs von 2500 bis 5000 U/min und einem effektiven Mitteldruck des Motors von ≥ 8 bar.

8. Verfahren nach Anspruch 7, **dadurch gekennzeichnet, dass** nach (b) und/oder (c) der Restsauerstoffgehalt über mindestens 50 % und insbesondere mindestens 80 % des Drehzahlbereichs erreicht wird.

9. Verfahren nach Anspruch 7 oder 8, **dadurch gekennzeichnet, dass** über mindestens 30 %, vorteilhaft mindestens 50 % und insbesondere mindestens 80 % des Mitteldruckfensters bis zum maximalen Mitteldruck der maximale Restsauerstoffgehalt erreicht wird.

10. Verfahren nach einem der Ansprüche 7 oder 9, insoweit er vom Anspruch 7 abhämgt, **dadurch gekennzeichnet, dass** nach (a) die Verbrennungsparameter derart beeinflusst werden, dass sich der gewünschte Restsauerstoffgehalt bereits bei einer Drehzahl n 4000 U/min, insbesondere n 5000 U/min, einstellt.

11. Verfahren nach einem der Ansprüche 7 bis 10, **dadurch gekennzeichnet, dass** die Verbrennungsparameter derart beeinflusst werden, dass sich der gewünschte Restsauerstoffgehalt bei einer Gemischzusammensetzung im Bereich von λ = 0,92 bis 0,95 einstellt.

12. Verfahren nach einem der Ansprüche 7 bis 11, **dadurch gekennzeichnet, dass** mindestens einer der folgenden Verbrennungsparameter: Spritzbeginn, Einspritzdruck, Einspritzdauer, Zündzeitpunkt und Kraftstoffsprayform, über ein Zünd- und Einspritzsystem verstellt werden.

## Claims

1. Direct injection and spark-ignition combustion engine (10) with a catalyst system in the exhaust duct (12), which comprises at least one NOₓ storage catalyst (18), and a measurement, evaluation and control device (20) for operational control of the combustion engine and for influencing an exhaust-gas composition by means of appropriate adjustment elements, **characterised in that** the adjustment elements comprise means, with which injection parameters and/or flow conditions in the combustion chamber of the combustion engine (10) can be influenced in such a manner that, with a composition of the mixture within the range from λ=0.9 to 1.0, an exhaust gas of the combustion engine (10) upstream of the NOₓ storage catalyst (18) or upstream of a catalyst connected before the latter, provides at least one of the following residual oxygen contents:
(a) ≤ 0.4% by volume in operational phases with an engine speed n ≥3000 rpm and an effective mean pressure of the engine of ≥9 bar,
(b) ≤0.4 % by volume over at least 30% of an engine speed range from 5000 to 6500 rpm or from 5000 rpm . to the rated engine speed and an effective mean pressure of the engine of ≥9 bar, and
(c) ≤0.95% by volume over at least 30% of an engine speed range from 2500 to 5000 rpm and an effective mean pressure of the engine of ≥8 bar.

2. Combustion engine according to claim 1, **characterised in that,** according to (b) and/or (c), the residual oxygen content is present over at least 50%, and in particular at least 80%, of the engine speed range.

3. Combustion engine according to claim 1 or 2, **characterised in that**, according to (a), the engine speed is n ≥4000 rpm, in particular, n ≥5000 rpm.

4. Combustion engine according to any one of the preceding claims, **characterised in that** the composition of the mixture is within the range from λ=0.92 to 0.95.

5. Combustion engine according to any one of the preceding claims, **characterised in that** the means comprise an ignition and injection system, with which at least one of the following combustion parameters can be influenced: start of injection, injection pressure, duration of injection, ignition point and fuel spray form.

6. Combustion engine according to any one of the preceding claims, **characterised in that** a shape of a piston and/or a cross-section of a valve opening and/or a course of an intake channel and/or a position and inclination of an injector are adapted for an optimised method of operation of the adjustment elements.

7. Method for minimising a residual oxygen content in the exhaust gas of a direct injection and spark-ignition combustion engine (10) with a catalyst system in the exhaust duct (12), which comprises at least one NOₓ storage catalyst (18), and a measurement, evaluation and control devise (20) for operational control of the combustion engine (10) and for influencing an exhaust gas composition by means of appropriate adjustment elements, **characterised in that** the injection parameters and/or flow conditions in the combustion chamber of the combustion engine (10) are influenced in such a manner that, with a composition of the mixture within the range from λ = 0.9 to 1.0, an exhaust gas of the combustion engine (10) upstream of the NOₓ storage catalyst (18) or upstream of a catalyst connected before the latter, provides at least one of the following residual oxygen contents:
(a) ≤0.4% by volume in operational phases with an engine speed n ≥3000 rpm and an effective mean pressure of the engine of ≥9 bar,
(b) ≤0.4 % by volume over at least 30% of an engine speed range from 5000 to 6500 rpm or from 5000 rpm to the rated engine speed and an effective mean pressure of the engine of ≥9 bar, and
(c) ≤0.95% by volume over at least 30% of an engine speed range from 2500 to 5000 rpm and an effective mean pressure of the engine of ≥8 bar.

8. Method according to claim 7, **characterised in that**, according to (b) and/or (c), the residual oxygen content is achieved over at least 50%, and in particular at least 80%, of the engine speed range.

9. Method according to claim 7 or 8, **characterised in that** the maximum residual oxygen content is achieved over at least 30%, advantageously at least 50% and, in particular, at least 80%, of the mean pressure window up to the maximum mean pressure.

10. Method according to claim 7 or claim 9 in so far as it is dependent upon claim 7, **characterised in that**, according to (a), the combustion parameters are influenced in such a manner that the desired residual oxygen content is already set with an engine speed n 4000 rpm, in particular, n 5000 rpm.

11. Method according to any one of claims 7 to 10, **characterised in that** the combustion parameters are influenced in such a manner that the desired residual oxygen content is set with a composition of the mixture within the range from λ=0.92 to 0.95.

12. Method according to any one of claims 7 to 11, **characterised in that** at least one of the following combustion parameters: start of injection, injection pressure, duration of injection, ignition point and fuel spray form, is adjusted via an ignition and injection system.

## Revendications

1. Moteur à combustion interne (10) à injection directe et à allumage commandé, comportant un système de catalyseur dans la tubulure de gaz d'échappement (12), qui comprend au moins un catalyseur accumulateur de NOₓ (18), ainsi qu'un dispositif de mesure, d'évaluation et de commande (20) pour commander le fonctionnement du moteur à combustion interne et pour influer sur une composition des gaz d'échappement à l'aide d'organes appropriés de réglage, **caractérisé en ce que** les organes de réglage comprennent des moyens, qui permettent d'influer sur des paramètres d'injection et/ou des rapports d'écoulement dans la chambre d'explosion du moteur à combustion interne (10), de telle sorte que des gaz d'échappement du moteur à combustion interne (10), en amont du catalyseur accumulateur de NOₓ (18) ou d'un catalyseur monté avant celui-ci, aient, pour une composition du mélange dans la plage de λ = 0,9 à 1,0, au moins l'une des teneurs suivantes en oxygène résiduel :
(a) ≤ 0,4 % en volume dans des phases de fonctionnement à une vitesse de rotation n ≥ 3000 tr/min, et pour une pression moyenne efficace du moteur ≥ 9 bars ;
(b) ≤ 0,4 % en volume sur au moins 30 % d'une plage de vitesses de rotation de 5000 à 6500 tr/min ou de 5000 tr/min jusqu'à la vitesse de rotation nominale, et pour une pression moyenne efficace du moteur ≥ 9 bars ; et
(c) ≤ 0,95 % en volume sur au moins 30 % d'une plage de vitesses de rotation de 2500 à 5000 tr/min, et pour une pression moyenne efficace du moteur ≥ 8 bars.

2. Moteur à combustion interne selon la revendication 1, **caractérisé en ce que** la teneur en oxygène résiduel, indiquée selon (b) et/ou (c), est présente sur au moins 50 % et, notamment sur au moins 80 %, de la plage de vitesses de rotation.

3. Moteur à combustion interne selon la revendication 1 ou 2, **caractérisé en ce que**, selon (a), la vitesse de rotation est de n ≥ 4000 tr/min, et notamment de n ≥ 5000 tr/min.

4. Moteur à combustion interne selon l'une des revendications précédentes, **caractérisé en ce que** la composition du mélange est située dans la plage de λ = 0,92 à 0,95.

5. Moteur à combustion interne selon l'une des revendications précédentes, **caractérisé en ce que** les moyens comportent un système d'allumage et d'injection, par lesquels on peut influer sur au moins l'un des paramètres suivants de combustion : début de l'injection, pression d'injection, durée d'injection, point d'allumage et/ou forme de pulvérisation du combustible.

6. Moteur à combustion interne selon l'une des revendications précédentes, **caractérisé en ce qu'**une forme de piston et/ou une section transversale d'ouverture de soupape et/ou une commande du conduit d'admission et/ou une position et une inclinaison d'un injecteur sont adaptés à un mode optimisé d'action des organes de réglage.

7. Procédé de réduction d'une teneur en oxygène résiduel des gaz d'échappement d'un moteur à combustion interne (10) à injection directe et à allumage commandé, comportant un système de catalyseur dans la tubulure de gaz d'échappement (12), qui comprend au moins un catalyseur accumulateur de NOₓ (18), ainsi qu'un dispositif de mesure, d'évaluation et de commande (20) pour commander le fonctionnement du moteur à combustion interne (10) et pour influer sur une composition des gaz d'échappement à l'aide d'organes appropriés de réglage, **caractérisé en ce qu'**une influence peut être exercée sur des paramètres d'injection et/ou des rapports d'écoulement dans la chambre d'explosion du moteur à combustion interne (10), de telle sorte que des gaz d'échappement du moteur à combustion interne (10), en amont du catalyseur accumulateur de NOₓ (18) ou d'un catalyseur monté avant celui-ci, aient, pour une composition du mélange dans la plage de λ = 0,9 à 1,0, au moins l'une des teneurs suivantes en oxygène résiduel :
(a) ≤ 0,4 % en volume dans des phases de fonctionnement à une vitesse de rotation n ≥ 3000 tr/min, et à une pression moyenne efficace du moteur ≥ 9 bars ;
(b) ≤ 0,4 % en volume sur au moins 30 % d'une plage de vitesses de rotation de 5000 à 6500 tr/min ou de 5000 tr/min jusqu'à la vitesse de rotation nominale, et pour une pression moyenne efficace du moteur ≥ 9 bars ; et
(c) ≤ 0,95 % en volume sur au moins 30 % d'une plage de vitesses de rotation de 2500 à 5000 tr/min, et pour une pression moyenne efficace du moteur ≥ 8 bars.

8. Procédé selon la revendication 7, **caractérisé en ce que** la teneur en oxygène résiduel, selon (b) et/ou (c), est obtenue sur au moins 50 % et, notamment sur au moins 80 %, de la plage de vitesses de rotation.

9. Procédé selon la revendication 7 ou 8, **caractérisé en ce que** la teneur maximale en oxygène résiduel est obtenue sur au moins 30 %, avantageusement sur au moins 50 % et, plus particulièrement sur au moins 80 %, d'une fenêtre de pression moyenne jusqu'à la pression moyenne maximale.

10. Procédé selon la revendication 7 ou 9, dans la mesure où elle dépend de la revendication 7, **caractérisé en ce que** l'on peut influer sur les paramètres de combustion selon (a), de telle sorte que la teneur souhaitée en oxygène résiduel apparaisse déjà à une vitesse de rotation n ≥ 4000 tr/min, et notamment n ≥ 5000 tr/min.

11. Procédé selon l'une des revendications 7 à 10, **caractérisé en ce que** l'on peut influer sur les paramètres de combustion, de telle sorte que la teneur souhaitée en oxygène résiduel apparaisse pour une composition du mélange dans la plage de λ = 0,92 à 0,95.

12. Procédé selon l'une des revendications 7 à 11, **caractérisé en ce qu'**au moins l'un des paramètres suivants de combustion : début de l'injection, pression d'injection, durée d'injection, point d'allumage et forme de pulvérisation du combustible, peut être ajusté par l'intermédiaire d'un système d'allumage et d'injection.
